# EUROPÄISCHE PATENTSCHRIFT

(11) **EP 3 710 416 B1**
(45) Veröffentlichungstag und Bekanntmachung des Hinweises auf die Patenterteilung: **20.10.2021**
(21) Anmeldenummer: 18796982.9
(22) Anmeldetag: 13.11.2018
(51) Int. Cl.: C04B 28/02, C04B 28/04, C04B 28/06, C04B 40/06

(54) **EINSATZ VON ZINKSALZEN IN KOMBINATION MIT ALKYLAMINEN IN ZEMENTÄREN TROCKENMÖRTELMISCHUNGEN**
USE OF ZINC SALTS IN COMBINATION WITH ALKYLAMINES IN CEMENTITIOUS DRY MORTAR MIXTURES
UTILISATION DE SELS DE ZINC EN COMBINAISON AVEC ALKYLAMINES DANS LES MÉLANGES DE MORTIER SEC À BASE DE CIMENT

(30) Priorität: 14.11.2017 EP 17201670
(43) Veröffentlichungstag der Anmeldung: 23.09.2020
(73) Patentinhaber: Construction Research & Technology GmbH, 83308 Trostberg (DE)
(72) Erfinder: SCHAEPERS, Yvonne, 86159 Augsburg (DE); BADER, Jürgen, 86159 Augsburg (DE); STOHR, Werner, 86159 Augsburg (DE); KOEHLER, Stefan, 86159 Augsberg (DE)
(86) Internationale Anmeldenummer: PCT/EP2018/081014
(87) Internationale Veröffentlichungsnummer: WO 2019/096760

(56) Entgegenhaltungen:
- WO-A1-01/08753
- WO-A2-2006/056996
- DE-A1-102013 007 937
- DE-U1-202004 010 467
- US-A1- 2015 119 490
- US-A1- 2017 002 257
- DATABASE WPI Week 201017 10. Februar 2010 (2010-02-10) Thomson Scientific, London, GB; AN 2010-C10089 XP002780076, & CN 101 643 334 A (HUANG J) 10. Februar 2010 (2010-02-10)

## Beschreibung

Die vorliegende Erfindung betrifft eine Bindemittelzusammensetzung, welche eine Mischung aus Tonerdezement und Portlandzement, optional Calciumsulfat, mindestens ein Zinksalz und mindestens ein Alkylamin umfasst sowie eine Trockenmörtelmischung, welche besagte Bindemittelzusammensetzung enthält. Des Weiteren betrifft die vorliegende Erfindung die Verwendung einer Zusammensetzung aus einem Zinksalz und einem Alkylamin zur Erreichung hoher Frühfestigkeiten in einer Bindemittelzusammensetzung.

Trockenmörtel ist ein Baustoff, der aus Bindemitteln wie Zement oder Kalk und nicht reaktiven Füllstoffen wie Kreide oder Quarzsand besteht und nach Zugabe von Anmachwasser durch chemische Reaktion der Bindemittel erhärtet. Mörtel dient in erster Linie zur Errichtung von Mauerwerk, zur Errichtung von Bauwerken, zur Betonreparatur, zur Herstellung und Reparatur von Estrichen, als Nutzschicht oder Ausgleichsschicht auf Betonböden und zum Verputzen von Wänden und Decken.

Das Erhärten des Bindemittels beruht auf der Bildung von Hydratationsprodukten, die bei der Reaktion mit dem Anmachwasser entstehen. Bei den Hauptbestandteilen von Zement handelt es sich um Calciumsilicate oder Calciumaluminate, deren Hydrate festigkeitsbildende Eigenschaften aufweisen. Üblicherweise werden dem Zement Sulfatträger als Erstarrungsregler zugegeben. Nach dem Erhärten und Erstarren von Zement entsteht ein steinartiger, wasserbeständiger Stoff, der sich durch hohe Festigkeit auszeichnet.

Bei tiefen Temperaturen tritt bei der Verwendung zementärer Bindemittel jedoch häufig das Problem auf, dass diese zu langsam abbinden, erstarren und erhärten und die erforderliche Festigkeit somit verzögert oder gar nicht erreicht wird. Daher sind bestimmte Bindemitteltypen in der kalten Jahreszeit nur sehr eingeschränkt oder gar nicht verwendbar.

Daher besteht ein Bedarf an Bindemittelzusammensetzungen, mit denen sich unabhängig von der Umgebungstemperatur hohe Frühfestigkeiten erzielen lassen.

Aufgabe der vorliegenden Erfindung war es demzufolge, eine Bindemittelzusammensetzung zur Erreichung hoher Frühfestigkeiten bei hohen und niedrigen Temperaturen bereitzustellen.

Gelöst wurde diese Aufgabe durch eine Bindemittelzusammensetzung, umfassend eine Mischung aus Tonerdezement und Portlandzement, optional Calciumsulfat, mindestens ein Zinksalz und mindestens ein Alkylamin.

Überraschend hat sich hierbei herausgestellt, dass zementäre Bindemittelzusammensetzungen durch Zugabe einer Zusammensetzung aus einem Zinksalz und einem Alkylamin sehr hohe Frühfestigkeiten aufweist. Die hohen Frühfestigkeiten werden hierbei nicht nur bei Raumtemperatur, sondern auch bei niedrigen Temperaturen erreicht.

Die vorliegende Erfindung umfasst die Bindemittelzusammensetzung
i) 0,1 bis 99,9 Gew.-% Portlandzement,
ii) 0,1 bis 99,9 Gew.-% Tonerdezement,
iii) optional 0,1 bis 99,0 Gew.-% Calciumsulfat,
iv) 0,01 bis 10,0 Gew.-% des mindestens einen Zinksalzes, und
v) 0,01 bis 10,0 Gew.-% des mindestens einen Alkylamins,
bezogen auf das Gesamtgewicht der Bindemittelzusammensetzung.

Gemäß einer anderen bevorzugten Ausführungsform der vorliegenden Erfindung ist das mindestens eine Zinksalz ausgewählt aus der Gruppe bestehend aus Zinkoxid, Zinkhydroxid, Zinkchlorid, Zinkfluorid, Zinkiodid, Zinkbromid, Zinkphosphat, Zinkhydrogenphosphat, Zinkdihydrogenphosphat, Zinkcarbonat, Zinkhydrogencarbonat, Zinknitrat, Zinknitrit, Zinksulfat, Zinkthiosulfat, Zinkhydrogensulfat, Zinksulfit, Zinksulfid, Zinkformiat, Zinkacetat, Zinkgluconat, Zinkstearat, Zinktartrat, Zinkcitrat sowie Gemischen aus diesen.

Besonders bevorzugt handelt es sich bei dem mindestens einen Zinksalz um Zinkcitrat und/oder Zinksulfat.

Gemäß einer bevorzugten Ausführungsform der vorliegenden Erfindung handelt es sich bei dem mindestens einen Alkylamin um einen Aminoalkohol und/oder ein Salz davon.

Gemäß einer weiteren bevorzugten Ausführungsform der vorliegenden Erfindung ist das mindestens eine Alkylamin ausgewählt aus der Gruppe bestehend aus Trishydroxymethylaminomethan, Diethanolamin, Triethanolamin, Triisopropanolamin oder Salzen von diesen sowie Gemischen aus diesen.

Gemäß einer anderen bevorzugten Ausführungsform der vorliegenden Erfindung enthält die Bindemittelzusammensetzung weiterhin bis zu 10,0 Gew.-% mindestens eines Zusatzstoffes, wobei es sich um mindestens einen Vertreter der Reihe Verdicker, Wasserretentionsmittel, pH-Modifikatoren, Beschleunigern, Verzögerern, Rheologiemodifikatoren, Hydrophobierungsmitteln, Pigmente, organische oder anorganische Fasern sowie Gemischen aus diesen handelt, bezogen auf das Gesamtgewicht der Bindemittelzusammensetzung.

Gemäß einer weiteren bevorzugten Ausführungsform der vorliegenden Erfindung enthält die Bindemittelzusammensetzung weiterhin bis zu 10,0 Gew.-% mindestens einer grenzflächenaktiven Substanz, bezogen auf das Gesamtgewicht der Bindemittelzusammensetzung.

Besonders bevorzugt ist die mindestens eine grenzflächenaktive Substanz ausgewählt aus der Gruppe bestehend aus Luftporenbildnern, Entschäumern, Benetzungsadditiven, Superplastifizierungsmitteln, Tensiden sowie Gemischen aus diesen.

Gemäß einer weiteren bevorzugten Ausführungsform der vorliegenden Erfindung enthält die Bindemittelzusammensetzung weiterhin bis zu 50,0 Gew.-% mindestens eines Dispersionspulvers, bezogen auf das Gesamtgewicht der Bindemittelzusammensetzung.

Unter Dispersionspulver im Sinne der Erfindung versteht man bevorzugt durch Sprühtrocknung aus wässrigen Polymerdispersionen hergestellte Pulver, die zur Herstellung von Trockenmörteln geeignet sind.

Besonders bevorzugt ist mindestens ein Dispersionspulver auf Basis von Polyethylen (PE), Polypropylen (PP), Polyvinylchlorid (PVC), Polyvinylacetat (PVAc), Polyvinylalkohol (PVOH), Polystyrol (PS), Polyacrylat (PAc), Polybutadienen (BR), Vinylester, Versatate, sowie Mischpolymere und/oder Gemischen aus diesen.

Alternativ können auch die nicht getrockneten, wässrigen Polymerdispersionen im Anmischvorgang am Ort der Verarbeitung zugegeben werden.

Gemäß einer weiteren bevorzugten Ausführungsform der vorliegenden Erfindung enthält die Bindemittelzusammensetzung weiterhin bis zu 80,0 Gew.-% mindestens einer latent-hydraulischen und/oder puzzolanischen Komponente, bezogen auf das Gesamtgewicht der Bindemittelzusammensetzung.

Besonders bevorzugt enthält die erfindungsgemäße Bindemittelzusammensetzung mindestens eine latent-hydraulische und/oder eine puzzolanische Komponente ausgewählt aus der Gruppe bestehend aus natürlichen oder thermisch aktivierten Gesteinsmehlen, Microsilica, Metakaolin, Alumosilikate, Flugaschen, Vulkanaschen, Trass, Reisschalenasche, aktivierter Ton, Puzzolane, Hüttensand, gebrannter Ölschiefer sowie Gemischen aus diesen.

Die vorliegende Erfindung betrifft weiterhin einen Artikel, umfassend die oben beschriebene Bindemittelzusammensetzung.

Bevorzugt handelt es sich bei dem Artikel um eine Trockenmörtelmischung.

Gemäß einer bevorzugten Ausführungsform der vorliegenden Erfindung enthält der Artikel weiterhin mindestens einen Füllstoff.

Gemäß einer anderen bevorzugten Ausführungsform der vorliegenden Erfindung handelt es sich bei dem Füllstoff um mindestens einen aus der Reihe Kreide, Quarzsand, Quarzmehl, Gesteinsmehle, Leichtfüllstoffe, Calcit, Dolomit, Talkum, Kaolin, Glimmer, Schwerspat, Bimsmehl, Perlit, Mineralschaum, Schaumperlen, Bims, Blähglas, Hohlglaskugeln, Vermiculit und Calciumsilikat-Hydrat.

Desweiteren betrifft die vorliegende Erfindung die Verwendung einer Zusammensetzung umfassend mindestens ein Zinksalz und mindestens ein Alkylamin zur Erreichung hoher Frühfestigkeiten in einer Bindemittelzusammensetzung, die 0,1 bis 99,9 Gew.-% Portlandzement, ii) 0,1 bis 99,9 Gew.-% Tonerdezement, iii) optional 0,1 bis 99,0 Gew.-% Calciumsulfat umfasst.

Im Folgenden wird die vorliegende Erfindung genauer beschrieben.

Wie oben erläutert, enthält die erfindungsgemäße Bindemittelzusammensetzung eine Mischung aus Tonerdezement und Portlandzement, optional Calciumsulfat, mindestens ein Zinksalz und mindestens ein Alkylamin.

Im Rahmen der vorliegenden Erfindung bezieht sich der Begriff "Bindemittel" auf anorganische Verbindungen, die in einer wässrigen Umgebung (hydraulisch) oder in Gegenwart von Luft (nicht-hydraulisch) härten. Zu den hydraulischen Bindemitteln zählen unter anderem Zement, hydraulischer Kalk, Trass und Puzzolane. Zu den nicht-hydraulischen Bindemitteln zählen unter anderem Gips, Luftkalk, Magnesiabinder und Lehm. Mineralische Bindemittel umfassen auch latent hydraulische Bindemittel wie Microsilica, Metakaolin, Alumosilikate, Flugaschen, aktivierter Ton, Puzzolane oder Mischungen daraus. Ein latent hydraulisches Bindemittel wird erst in Anwesenheit eines basischen Aktivators hydraulisch. Das alkalische Medium zur Aktivierung der Bindemittel umfasst üblicherweise wässrige Lösungen von Alkalimetallcarbonaten, Alkalimetallfluoriden, Alkalimetallhydroxiden, Alkalimetallaluminaten und/oder Alkalimetallsilikaten wie z.B. löslichem Wasserglas.

Im Rahmen der vorliegenden Erfindung bezieht sich der Begriff "Zement" auf ein anorganisches, fein gemahlenes hydraulisches Bindemittel. Die unterschiedlichen Zementarten werden gemäß DIN EN 197-1 (11/2011) in die Kategorien CEM I-V klassifiziert. Der Begriff "Zement" umfasst auch Zemente nach EN 14216, Calcium-Aluminat-Zemente, Calcium-Sulfo-Aluminat Zemente (CSA-Zemente) und Mischungen davon.

CEM I Zement, auch Portlandzement genannt, enthält etwa 70 Gew.-% CaO und MgO, etwa 20 Gew.-% SiO₂, etwa 10 Gew.-% Al₂O₃ und Fe₂O₃. Dieser Zement wird durch Fräsen und Backen von Kalkstein, Kreide und Ton gewonnen. CEM II Zement, auch Portlandkompositzement genannt, ist Portlandzement mit einer niedrigen (etwa 6 bis etwa 20 Gew.-%) oder moderaten (etwa 20 bis etwa 35 Gew.-%) Menge an zusätzlichen Komponenten. Dieser Zement kann weiterhin Hochofenschlacke, pyrogene Kieselsäure (höchstens 10 Gew.-%), natürliche Puzzolane, natürliche kalzinierte Puzzolane, Flugasche, verbrannte Schiefer oder Mischungen davon enthalten. CEM III Zement, auch Hochofenzement genannt, besteht aus Portlandzement, der 36 bis 85 Gew.-% Schlacke enthält. CEM IV Zement, auch als Puzzolanzement bezeichnet, enthält neben Portlandzement 11 bis 65 Gew.-% Mischungen aus Puzzolanen, Kieselsäure und Flugasche. CEM V Zement, auch Kompositzement genannt, enthält neben Portlandzement 18 bis 50 Gew.-% Schlacke oder Mischungen von natürlichen Puzzolanen, kalzinierten Puzzolanen und Flugasche. Zusätzlich können die verschiedenen Zementarten 5 Gew.-% zusätzliche anorganische, fein gemahlene Mineralverbindungen enthalten.

Calcium-Aluminat-Zemente umfassen Minerale der Formel CaO x Al₂O₃. Sie können z.B. durch Schmelzen von Calciumoxid (CaO) oder Kalkstein (CaCO₃) mit Bauxit oder Aluminat erhalten werden. Calcium-Aluminat-Zemente umfassen etwa 20 bis 40 Gew.-% CaO, bis zu 5 Gew.-% SiO₂, etwa 40 bis 80 Gew.-% Al₂O₃ und bis zu etwa 20 Gew.-% Fe₂O₃. Calcium-Aluminat-Zemente werden in der Norm DIN EN 14647 (01/2006) definiert.

Calcium-Sulfo-Aluminat Zemente können aus Tricalcium Aluminat (3 CaO x Al₂O₃), Anhydrit (CaSO₄), Calcium Sulfat Hemihydrat (CaSO₄ x 0,5 H₂O) und/oder Gips (CaSO₄ x 2 H₂O) hergestellt werden.

Bei einem der Hauptbestandteile der erfindungsgemäßen Bindemittelzusammensetzung handelt es sich um eine Mischung aus Tonerdezement und Portlandzement.

Erfindungsgemäss enthält die Bindemittelzusammensetzung Portlandzement und Tonerdezement in einem Gewichtsverhältnis im Bereich von 90:10 bis 10:90, mehr bevorzugt 80:20 bis 20:80, besonders bevorzugt 70:30 bis 30:70.

Erfindungsgemäss enthält die Bindemittelzusammensetzung 0,1 bis 99,9 Gew.-%, mehr bevorzugt 5,0 bis 90,0 Gew.-%, noch mehr bevorzugt 20,0 bis 60,0 Gew.-% besonders bevorzugt 30,0 bis 50,0 Gew.-% Portlandzement und 0,1 bis 99,9 Gew.-%, mehr bevorzugt 5,0 bis 90,0 Gew.-%, noch mehr bevorzugt 10,0 bis 50,0 Gew.-% besonders bevorzugt 15,0 bis 35,0 Gew.-% Tonerdezement, bezogen auf das Gesamtgewicht der Bindemittelzusammensetzung.

Optional enthält die erfindungsgemäße Bindemittelzusammensetzung Calciumsulfat.

Im Rahmen der vorliegenden Erfindung bezieht sich der Begriff Calciumsulfat auf die Verbindungen Calciumsulfat-Dihydrat (CaSO₄ x 2H₂O), Calciumsulfat-Hemihydrat (CaSO₄ x ½ H₂O) und Calciumsulfat-Anhydrit (CaSO₄). Natürlich vorkommender Gips ist CaSO₄ x 2H₂O. Allerdings kann gebrannter Gips in einer Vielzahl von Hydratationszuständen gemäß der allgemeinen Formel CaSO₄·x nH₂O, mit 0 ≤ n < 2, vorliegen.

Gemäß einer bevorzugten Ausführungsform der vorliegenden Erfindung enthält die Bindemittelzusammensetzung Calciumsulfat.

Bevorzugt enthält die erfindungsgemäße Bindemittelzusammensetzung 0,1 bis 99,0 Gew.-%, noch mehr bevorzugt 1,0 bis 60,0 Gew.-%, noch mehr bevorzugt 2,0 bis 40,0 Gew.-% besonders bevorzugt 3,0 bis 30,0 Gew.-%, wie beispielsweise 5,0 bis 20,0 Gew.-% Calciumsulfat, bezogen auf das Gesamtgewicht der Bindemittelzusammensetzung.

Desweiteren enthält die erfindungsgemäße Bindemittelzusammensetzung mindestens ein Zinksalz und mindestens ein Alkylamin.

Gemäß einer bevorzugten Ausführungsform der vorliegenden Erfindung enthält die Bindemittelzusammensetzung das mindestens eine Zinksalz und das mindestens eine Alkylamin in einem Gewichtsverhältnis von 10:90 bis 90:10, mehr bevorzugt von 20:80 bis 80:20, besonders bevorzugt von 70:30 bis 30:70.

Bei dem mindestens einen Zinksalz kann es sich um ein Zinksalz um ein Oxid, Hydroxid, oder das Zinksalz einer anorganischen und/oder einer organischen Säure handeln.

Besonders bevorzugt ist das mindestens eine Zinksalz ausgewählt aus der Gruppe bestehend aus Zink(II)-oxid (ZnO), Zink(II)-hydroxid (Zn(OH)₂), Zink(II)-chlorid (ZnCl₂), Zink(II)-fluorid (ZnF₂), Zinkiodid (Znl₂), Zinkbromid (ZnBr₂), Zinkphosphat (Zn₃(PO₄)₂), Zinkhydrogenphosphat (ZnHPO₄), Zinkdihydrogenphosphat (Zn(H₂PO₄)₂), Zink(II)-carbonat (ZnCO₃), Zinkhydrogencarbonat (Zn(HCO₃)₂), Zink(II)-nitrat (Zn(NO₃)₂), Zink(II)-nitrit (Zn(NO₂)₂), Zink(II)-sulfat (ZnSO₄), Zink(II)-thiosulfat (ZnS₂O₃), Zink(II)-hydrogensulfat (Zn(HSO₄)₂), Zink(II)-sulfit (ZnSO₃), Zink(II)-sulfid (ZnS), Zink(II)-formiat (Zn(HOOC)₂), Zink(II)-acetat (Zn(MeOOC)₂), Zink(II)-gluconat, Zink(II)-stearat, Zink(II)-tartrat, Trizinkdicitrat sowie Gemischen aus diesen.

Gemäß einer besonders bevorzugten Ausführungsform der vorliegenden Erfindung handelt es sich bei dem mindestens einen Zinksalz um Zinkcitrat und/oder Zinksulfat.

Im Rahmen der vorliegenden Erfindung handelt es sich bei Zinkgluconat, Zinkstearat, Zinktartrat und Zinkcitrat um die Zinksalze von Gluconsäure, Stearinsäure, Weinsäure und Zitronensäure. Bevorzugt handelt es sich bei Zinkcitrat um Trizinkdicitrat.

Demnach handelt es sich besonders bevorzugt bei dem mindestens einen Zinksalz um Trizinkdicitrat und/oder Zink(II)-sulfat.

Erfindungsgemäss enthält die Bindemittelzusammensetzung 0,01 bis 10,0 Gew.-%, mehr bevorzugt 0,05 bis 5,0 Gew.-%, noch mehr bevorzugt 0,05 bis 1,0 Gew.-% besonders bevorzugt 0,1 bis 0,5 Gew.-% des mindestens einen Zinksalzes, bezogen auf das Gesamtgewicht der Bindemittelzusammensetzung.

Bei dem mindestens einen Alkylamin handelt es sich bevorzugt um ein Alkylamin der Formel (I)

NR¹R²R³ (I),

wobei R¹, R² und R³ unabhängig voneinander für Wasserstoff oder unverzweigte oder verzweigte C₁-C₂₀ Alkylreste stehen, welche unabhängig voneinander unsubstituiert oder mit - OH, -NH₂, -F, -Cl, -Br, -I, -SO₃H, und/oder -COOH substituiert sein können mit der Maßgabe, dass mindestens einer von R¹, R² und R³ nicht Wasserstoff ist.

Bevorzugt stehen R¹, R² und R³ unabhängig voneinander für Wasserstoff oder unverzweigte oder verzweigte C₁-C₂₀ Alkylreste, welche mit -OH substituiert sind mit der Maßgabe, dass mindestens einer von R¹, R² und R³ nicht Wasserstoff ist.

Besonders bevorzugt stehen R¹, R² und R³ unabhängig voneinander für Wasserstoff, --(CH₂)₂-OH oder ―C(CH₂OH)₃ mit der Maßgabe, dass mindestens einer von R¹, R² und R³ nicht Wasserstoff ist.

Demnach handelt es sich bei dem mindestens einen Alkylamin besonders bevorzugt um einen Aminoalkohol und/oder ein Salz davon.

R¹, R² und R³ können gleich oder verschieden sein. Bevorzugt sind R¹, R² und R³ gleich.

Gemäß einer bevorzugten Ausführungsform der vorliegenden Erfindung ist das mindestens eine Alkylamin ausgewählt ist aus der Gruppe bestehend aus Trishydroxymethylaminomethan, Diethanolamin, Triethanolamin, Triisopropanolamin oder Salzen von diesen sowie Gemischen aus diesen.

Besonders bevorzugt handelt es sich bei dem mindestens einen Alkylamin um Triethanolamin und/oder Trishydroxymethylaminomethan.

Bevorzugt enthält die erfindungsgemäße Bindemittelzusammensetzung 0,01 bis 10,0 Gew.-%, mehr bevorzugt 0,05 bis 5,0 Gew.-%, noch mehr bevorzugt 0,05 bis 3,0 Gew.-% besonders bevorzugt 0,1 bis 1,0 Gew.-% des mindestens einen Alkylamins, bezogen auf das Gesamtgewicht der Bindemittelzusammensetzung.

Erfindungsgemäss enthält die Bindemittelzusammensetzung 0,1 bis 99,9 Gew.-%, mehr bevorzugt 5,0 bis 90,0 Gew.-%, noch mehr bevorzugt 20,0 bis 60,0 Gew.-% besonders bevorzugt 30,0 bis 50,0 Gew.-% Portlandzement und 0,1 bis 99,9 Gew.-%, mehr bevorzugt 5,0 bis 90,0 Gew.-%, noch mehr bevorzugt 10,0 bis 50,0 Gew.-% besonders bevorzugt15,0 bis 35,0 Gew.-% Tonerdezement, optional 0,1 bis 99,0 Gew.-%, noch mehr bevorzugt 1,0 bis 60,0 Gew.-%, noch mehr bevorzugt 2,0 bis 40,0 Gew.-% besonders bevorzugt 3,0 bis 30,0 Gew.-%, wie beispielsweise 5,0 bis 20,0 Gew.-% Calciumsulfat, 0,01 bis 10,0 Gew.-%, mehr bevorzugt 0,05 bis 5,0 Gew.-%, noch mehr bevorzugt 0,05 bis 1,0 Gew.-% besonders bevorzugt 0,1 bis 0,5 Gew.-% des mindestens einen Zinksalzes, und 0,01 bis 10,0 Gew.-%, mehr bevorzugt 0,05 bis 5,0 Gew.-%, noch mehr bevorzugt 0,05 bis 3,0 Gew.-% besonders bevorzugt 0,1 bis 1,0 Gew.-% des mindestens einen Alkylamins, bezogen auf das Gesamtgewicht der Bindemittelzusammensetzung.

Gemäß einer anderen bevorzugten Ausführungsform der vorliegenden Erfindung enthält die Bindemittelzusammensetzung weiterhin bis zu 80,0 Gew.-%, mehr bevorzugt bis zu 50 Gew.-%, noch mehr bevorzugt bis zu 20 Gew.-%, besonders bevorzugt bis zu 10 Gew.-% mindestens eines Zusatzstoffes, wobei es sich um mindestens einen Vertreter der Reihe latent-hydraulische Stoffe, puzzolanische Stoffe, Dispersionspulver, Verdicker, Wasserretentionsmittel, pH-Modifikatoren, Beschleunigern, Verzögerern, Rheologiemodifikatoren, Superplastifizierungsmitteln, Tensiden, Hydrophobierungsmitteln, Pigmente, organische oder anorganische Fasern sowie Gemischen aus diesen handelt, bezogen auf das Gesamtgewicht der Bindemittelzusammensetzung.

Wie oben erläutert sind latent-hydraulische und puzzolanische Stoffe mineralische Bindemittel, die erst in Anwesenheit eines basischen Aktivators hydraulisch werden. Geeignete latent-hydraulische und/oder puzzolanische Komponenten sind ausgewählt aus der Gruppe bestehend aus natürlichen oder thermisch aktivierten Gesteinsmehlen, Microsilica, Metakaolin, Alumosilikate, Flugaschen, Vulkanaschen, Trass, Reisschalenasche, aktivierter Ton, Puzzolane, Hüttensand, gebrannter Ölschiefer oder Gemischen aus diesen.

Besonders bevorzugt handelt es sich bei der latent-hydraulischen und/oder puzzolanischen Komponente um Microsilica.

Gemäß einer weiteren bevorzugten Ausführungsform der vorliegenden Erfindung enthält die Bindemittelzusammensetzung weiterhin bis zu 50,0 Gew.-% mindestens eines Dispersionspulvers, bezogen auf das Gesamtgewicht der Bindemittelzusammensetzung.

Insbesondere bei der Verwendung des erfindungsgemäßen Bindemittels in Zement- oder Gipsmörteln führt die Zugabe von Dispersionspulvern zu einer deutlichen Verbesserung der Eigenschaften. Beispielsweise führt die Zugabe von Dispersionspulvern vor dem Abbinden zu einem geringeren Wasserbedarf und einer längeren Verarbeitungszeit.

Geeignet sind Dispersionspulver auf Basis von Polyethylen (PE), Polypropylen (PP), Polyvinylchlorid (PVC), Polyvinylacetat (PVAc), Polyvinylalkohol (PVOH), Polystyrol (PS), Polyacrylat (PAc), Polybutadienen (BR), Vinylester, Versatate, sowie Mischpolymere und/oder Gemischen aus diesen.

Alternativ können auch die nicht getrockneten, wässrigen Polymerdispersionen im Anmischvorgang am Ort der Verarbeitung zugegeben werden.

Als Verdicker können sowohl organische als auch anorganische Verdicker für die erfindungsgemäße Bindemittelzusammensetzung verwendet werden.

Geeignete organische Verdicker sind ausgewählt aus der Gruppe bestehend aus Celluloseethern, Stärkeethern, und Polyacrylamiden. In einer weiteren Ausführungsform ist der Verdicker ausgewählt aus Polysaccharidderivaten und (Co)polymeren mit einem gewichtsmittleren Molekulargewicht Mw von mehr als 500.000 g/Mol, insbesondere mehr als 1.000.000 g/Mol.

In einer weiteren Ausführungsform ist der Verdicker ausgewählt aus Celluloseethern, Stärkeethern und (Co)polymeren, die Struktureinheiten von nicht-ionischen (Meth)acrylamid-monomeren und/oder Sulfonsäuremonomeren und gegebenenfalls von weiteren Monomeren umfassen. Bevorzugt sind Celluloseether und Stärkeether. Besonders bevorzugt sind Celluloseether.

Geeignete Celluloseether sind Alkylcellulosen wie Methylcellulose, Ethylcellulose, Propylcellulose und Methylethylcellulose; Hydroxyalkylcellulosen wie Hydroxyethylcellulose (HEC), Hydroxypropylcellulose (HPC) und Hydroxyethylhydroxypropylcellulose; Alkylhydroxyalkylcellulosen wie Methylhydroxyethylzelluose (MHEC), Methylhydroxypropylzelluose (MHPC) und Propylhydroxypropylcellulose; und carboxylierte Celluloseether, wie Carboxymethylcellulose (CMC). Bevorzugt sind die nicht-ionischen Celluloseetherderivate, insbesondere Methylcellulose (MC), Hydroxypropylcellulose (HPC), Hydroxyethylcellulose (HEC) und Ethylhydroxyethylcellulose (EHEC), und besonders bevorzugt sind Methylhydroxyethylcellulose (MHEC) und Methylhydroxypropylcellulose (MHPC). Die Celluloseetherderivate sind jeweils durch entsprechende Alkylierung und Alkoxylierung von Cellulose und im Handel erhältlich.

Geeignete Stärkeether sind nichtionische Stärkeether, wie Hydroxypropylstärke, Hydroxyethylstärke und Methylhydroxypropylstärke. Bevorzugt ist Hydroxypropylstärke. Geeignete Verdicker sind auch mikrobiell hergestellte Polysaccharide wie Welan Gum und/oder Xanthane und natürlich vorkommende Polysaccharide wie Alginate, Carrageenane und Galactomannane. Diese können aus entsprechenden Naturprodukten durch extraktive Verfahren gewonnen werden, wie beispielsweise im Fall von Alginaten und Carrageenanen aus Algen, im Fall von Galactomannanen aus Johannesbrotbaumkernen.

(Co)polymere mit einem gewichtsmittleren Molekulargewicht MW von mehr als 500.000 g/mol, besonders bevorzugt mehr als 1.000.000 g/mol, können (vorzugsweise durch radikalische Polymerisation) aus nichtionischen (Meth)acrylamidmonomeren und/oder Sulfonsäuremonomeren hergestellt werden. In einer Ausführungsform sind die Monomere ausgewählt unter Acrylamid, Methacrylamid, N-Methylacrylamid, N-Methylmethacrylamid, N,N-Dimethylacrylamid, N-Ethylacrylamid, N,N-Diethylacrylamid, N-Cyclohexylacrylamid, N-Benzylacrylamid, N,N-Dimethylaminopropylacrylamid, N,N-Dimethylaminoethylacrylamid und/oder N-tert.-Butylacrylamid und/oder Styrolsulfonsäure, 2-Acrylamido-2-methylpropansulfonsäure, 2-Methacrylamido-2-methylpropansulfonsäure, 2-Acrylamidobutansulfonsäure und/oder 2-Acrylamido-2,4,4-trimethylpentansulfonsäure oder den Salzen der genannten Säuren. Vorzugsweise enthalten die (Co)polymere mehr als 50 mol-% und besonders bevorzugt mehr als 70 mol-% Struktureinheiten, die sich von nichtionischen (Meth)acrylamidmonomeren und/oder Sulfonsäuremonomeren ableiten. Andere Struktureinheiten, die in den Copolymeren enthalten sein können, sind beispielsweise von den Monomeren (Meth)acrylsäure, Estern von (Meth)acrylsäuren mit verzweigten oder unverzweigten C₁- bis C₁₀-Alkoholen, Vinylacetat, Vinylpropionat und/oder Styrol abgeleitet.

In einer weiteren Ausführungsform ist der Verdicker ausgewählt aus Methylcellulose, Hydroxypropylcellulose, Hydroxyethylcellulose, Ethylhydroxyethylcellulose, Hydroxypropylstärke, Hydroxyethylstärke, Methylhydroxypropylstärke, und (Co)polymeren, die Struktureinheiten enthalten, welche abgeleitet sind von Acrylamid, Methacrylamid, N,N-Dimethylacrylamid, 2-Acrylamido-2-methylpropansulfonsäure und gegebenenfalls (Meth)acrylsäure, Estern von (Meth)acrylsäuren mit verzweigten oder unverzweigten C₁- bis C₁₀-Alkoholen, Vinylacetat, Vinylpropionat und/oder Styrol.

Geeignete anorganische Verdicker sind beispielsweise Schichtsilicate.

Rheologiemodifikatoren stellen die Viskosität und damit das Fließverhalten ein und sorgen für ein gutes Gleichgewicht zwischen Konsistenz, Haltbarkeit und Anwendungseigenschaften. Diese Modifikatoren können auf synthetischen Polymeren (z. B. Acrylpolymeren), Cellulose, Siliciumdioxid, Stärken oder Tonen basieren.

Superplastifizierungsmittel sind Polymere, die als Dispergiermittel wirken, um Partikelsegregation zu vermeiden oder die Rheologie und damit die Verarbeitbarkeit von Suspensionen zu verbessern. Superplastifizierungsmittel können im Allgemeinen in folgende Kategorien eingeteilt werden: Lignosulfonate, Melaminsulfonate, Naphthalinsulfonate, Kammpolymere (z. B. Polycarboxylatether, polyaromatische Ether, kationische Copolymere und Mischungen daraus) und sulfonierte Ketonformaldehydkondensate. Bevorzugte Superplastifizierungsmittel sind Naphthalinsulfonate oder Polycarboxylatether.

Die Abbindezeit der Bindemittelzusammensetzung kann durch die Zugabe von bestimmten Verbindungen, die als Verzögerer/Beschleuniger bezeichnet werden, verlängert/verkürzt werden. Verzögerer können in die Gruppen von Lignosulfonaten, Cellulosederivaten, Hydroxylcarbonsäuren, Organophosphaten, synthetischen Verzögerern und anorganischen Verbindungen aufgeteilt werden. Nicht beschränkende Beispiele für Verzögerer sind Hydroxyethylcellulose, Carboxymethylhydroxyethylcellulose, Zitronensäure, Weinsäure, Gluconsäure, Glucoheptonat, Maleinsäureanhydrid, 2-Acrylamido-2-methylpropansulfonsäure (AMPS) -Copolymere, Borax, Borsäure und ZnO. Nicht beschränkende Beispiele für Beschleuniger sind Alkalicarbonate, CaCl₂, KCl, Na₂SiO₃, NaOH, Ca(OH)₂ und CaO x Al₂O₃, Lithiumsilikat, Kaliumsilikat und Aluminiumsalze wie Aluminiumsulfat.

Bevorzugt handelt es sich bei dem Beschleuniger um mindestens ein Alkalicarbonat ausgewählt aus der Gruppe bestehend aus Li₂CO₃, Na₂CO₃, K₂CO₃ sowie Gemischen aus diesen. Besonders bevorzugt ist Li₂CO₃.

Bevorzugt enthält die erfindungsgemäße Bindemittelzusammensetzung bis zu 10,0 Gew.-%, mehr bevorzugt bis zu 5,0 Gew.-%, noch mehr bevorzugt bis zu 2,0 Gew.-%, besonders bevorzugt bis zu 1,0 Gew.-% mindestens eines Verzögeres und/oder Beschleunigers.

Gemäß einer bevorzugten Ausführungsform der vorliegenden Erfindung enthält die Bindemittelzusammensetzung bis zu 10,0 Gew.-%, mehr bevorzugt bis zu 5,0 Gew.-%, noch mehr bevorzugt bis zu 2,0 Gew.-%, besonders bevorzugt bis zu 1,0 Gew.-% mindestens eines Beschleunigers ausgewählt aus der Gruppe bestehend aus Alkalicarbonaten, CaCl₂, KCl, Na₂SiO₃, NaOH, Ca(OH)₂ und CaO x Al₂O₃, Lithiumsilikat, Kaliumsilikat, Aluminiumsalzen sowie Gemischen aus diesen.

Bei dem Wasserretentionsmittel kann es sich insbesondere um Methylcellulose und/oder ein wasserlösliches oder wasserquellbares sulfogruppenhaltiges Copolymer handeln. Bei den sulfogruppenhaltigen Copolymeren kann es sich beispielsweise um Verbindungen handeln wie diese in der DE 10037629 beschrieben werden. Bezüglich der enthaltenen sulfogruppenhaltigen Copolymeren wird auf die Patentanmeldungen DE 10037629, WO 2008113460 sowie WO 2005090424 Bezug genommen.

Tenside, die zusätzlich zu den hierin beschriebenen grenzflächenaktiven Substanzen verwendet werden können, umfassen nichtionische Tenside, anionische Tenside, kationische Tenside, zwitterionische Tenside und Proteine oder synthetische Polymere.

Der Begriff "pH-Modifizierer" bezieht sich auf ein alkalisches oder saures Mittel und schließt mineralische und organische Säuren sowie anorganische und organische Basen ein.

Hydrophobierungsmittel können die Aufnahme von Wasser, beispielsweise in Form von Wasserdampf, verhindern. Dadurch können Schäden, die durch eindringendes Wasser entstehen, verhindert oder zumindest verringert werden. Geeignete Hydrophobierungsmittel umfassen Silikone, Fettsäuren und Wachse.

Wie oben erläutert enthält die erfindungsgemäße Bindemittelzusammensetzung bevorzugt bis zu 80,0 Gew.-%, mehr bevorzugt bis zu 50 Gew.-%, noch mehr bevorzugt bis zu 20 Gew.-%, besonders bevorzugt bis zu 10 Gew.-% des mindestens eines Zusatzstoffes, bezogen auf das Gesamtgewicht der Bindemittelzusammensetzung.

Demnach enthält die erfindungsgemäße Bindemittelzusammensetzung bevorzugt 0,1 bis 99,9 Gew.-%, mehr bevorzugt 5,0 bis 90,0 Gew.-%, noch mehr bevorzugt 20,0 bis 60,0 Gew.-% besonders bevorzugt 30,0 bis 50,0 Gew.-% Portlandzement und 0,1 bis 99,9 Gew.-%, mehr bevorzugt 5,0 bis 90,0 Gew.-%, noch mehr bevorzugt 10,0 bis 50,0 Gew.-% besonders bevorzugt 15,0 bis 35,0 Gew.-% Tonerdezement, optional 0,1 bis 99,0 Gew.-%, noch mehr bevorzugt 1,0 bis 60,0 Gew.-%, noch mehr bevorzugt 2,0 bis 40,0 Gew.-% besonders bevorzugt 3,0 bis 30,0 Gew.-%, wie beispielsweise 5,0 bis 20,0 Gew.-% Calciumsulfat, 0,01 bis 10,0 Gew.-%, mehr bevorzugt 0,05 bis 5,0 Gew.-%, noch mehr bevorzugt 0,05 bis 1,0 Gew.-% besonders bevorzugt 0,1 bis 0,5 Gew.-% des mindestens einen Zinksalzes, 0,01 bis 10,0 Gew.-%, mehr bevorzugt 0,05 bis 5,0 Gew.-%, noch mehr bevorzugt 0,05 bis 3,0 Gew.-% besonders bevorzugt 0,1 bis 1,0 Gew.-% des mindestens einen Alkylamins und bis zu 80,0 Gew.-%, mehr bevorzugt bis zu 50 Gew.-%, noch mehr bevorzugt bis zu 20 Gew.-%, besonders bevorzugt bis zu 10 Gew.-% des mindestens eines Zusatzstoffes, bezogen auf das Gesamtgewicht der Bindemittelzusammensetzung.

Bevorzugt handelt es sich bei dem mindestens einen Zusatzstoff um mindestens eine latent-hydraulische und/oder puzzolanische Komponente. Insbesondere bevorzugt ist Microsilica.

Demnach enthält die erfindungsgemäße Bindemittelzusammensetzung bevorzugt 0,1 bis 99,9 Gew.-%, mehr bevorzugt 5,0 bis 90,0 Gew.-%, noch mehr bevorzugt 20,0 bis 60,0 Gew.-% besonders bevorzugt 30,0 bis 50,0 Gew.-% Portlandzement und 0,1 bis 99,9 Gew.-%, mehr bevorzugt 5,0 bis 90,0 Gew.-%, noch mehr bevorzugt 10,0 bis 50,0 Gew.-% besonders bevorzugt 15,0 bis 35,0 Gew.-% Tonerdezement, optional 0,1 bis 99,0 Gew.-%, noch mehr bevorzugt 1,0 bis 60,0 Gew.-%, noch mehr bevorzugt 2,0 bis 40,0 Gew.-% besonders bevorzugt 3,0 bis 30,0 Gew.-%, wie beispielsweise 5,0 bis 20,0 Gew.-% Calciumsulfat, 0,01 bis 10,0 Gew.-%, mehr bevorzugt 0,05 bis 5,0 Gew.-%, noch mehr bevorzugt 0,05 bis 1,0 Gew.-% besonders bevorzugt 0,1 bis 0,5 Gew.-% des mindestens einen Zinksalzes, 0,01 bis 10,0 Gew.-%, mehr bevorzugt 0,05 bis 5,0 Gew.-%, noch mehr bevorzugt 0,05 bis 3,0 Gew.-% besonders bevorzugt 0,1 bis 1,0 Gew.-% des mindestens einen Alkylamins und bis zu 80,0 Gew.-%, mehr bevorzugt bis zu 50 Gew.-%, noch mehr bevorzugt bis zu 20 Gew.-%, besonders bevorzugt bis zu 10 Gew.-% Microsilica, bezogen auf das Gesamtgewicht der Bindemittelzusammensetzung.

Desweiteren enthält die erfindungsgemäße Bindemittelzusammensetzung bevorzugt mindestens einen Beschleuniger und/oder Verzögerer als Zusatzstoff.

Demnach enthält die erfindungsgemäße Bindemittelzusammensetzung bevorzugt 0,1 bis 99,9 Gew.-%, mehr bevorzugt 5,0 bis 90,0 Gew.-%, noch mehr bevorzugt 20,0 bis 60,0 Gew.-% besonders bevorzugt 30,0 bis 50,0 Gew.-% Portlandzement und 0,1 bis 99,9 Gew.-%, mehr bevorzugt 5,.0 bis 90,0 Gew.-%, noch mehr bevorzugt 10,0 bis 50,0 Gew.-% besonders bevorzugt 15,0 bis 35,0 Gew.-% Tonerdezement, optional 0,1 bis 99,0 Gew.-%, noch mehr bevorzugt 1,0 bis 60,0 Gew.-%, noch mehr bevorzugt 2,0 bis 40,0 Gew.-% besonders bevorzugt 3,0 bis 30,0 Gew.-%, wie beispielsweise 5,0 bis 20,0 Gew.-% Calciumsulfat, 0,01 bis 10,0 Gew.-%, mehr bevorzugt 0,05 bis 5,0 Gew.-%, noch mehr bevorzugt 0,05 bis 1,0 Gew.-% besonders bevorzugt 0,1 bis 0,5 Gew.-% des mindestens einen Zinksalzes, 0,01 bis 10,0 Gew.-%, mehr bevorzugt 0,05 bis 5,0 Gew.-%, noch mehr bevorzugt 0,05 bis 3,0 Gew.-% besonders bevorzugt 0,1 bis 1,0 Gew.-% des mindestens einen Alkylamins, bis zu 80,0 Gew.-%, mehr bevorzugt bis zu 50 Gew.-%, noch mehr bevorzugt bis zu 20 Gew.-%, besonders bevorzugt bis zu 10 Gew.-% Microsilica und bis zu 10,0 Gew.-%, mehr bevorzugt bis zu 5,0 Gew.-%, noch mehr bevorzugt bis zu 2,0 Gew.-%, besonders bevorzugt bis zu 1,0 Gew.-% mindestens eines Verzögeres und/oder Beschleunigers, bezogen auf das Gesamtgewicht der Bindemittelzusammensetzung.

Gemäß einer weiteren bevorzugten Ausführungsform der vorliegenden Erfindung enthält die Bindemittelzusammensetzung weiterhin bis zu 10,0 Gew.-% mindestens einer grenzflächenaktiven Substanz, bezogen auf das Gesamtgewicht der Bindemittelzusammensetzung.

Besonders bevorzugt ist die mindestens eine grenzflächenaktive Substanz ausgewählt aus der Gruppe bestehend aus Luftporenbildnern, Entschäumern, Benetzungsadditiven sowie Gemischen aus diesen.

Als Luftporenbildner wird bevorzugt mindestens einer aus der Reihe Tall- und Balsamharze, Alkylsulfate und/oder deren Salze, Ligninsulfonate, Gasbildner, Carboxylverbindungen und/oder deren Salze und Proteinsäuren eingesetzt, wobei es sich bevorzugt um Natriumlaurylsulfat handelt. Bei Gasbildnern kann es sich um Metalle, insbesondere Aluminium oder Zink handeln, welche beispielsweise im angesetzten Mörtel Wasserstoff bilden.

Desweiteren können der erfindungsgemäßen Bindemittelzusammensetzung Fasern zugesetzt werden, wobei es sich bevorzugt um mindestens eine aus der Reihe Cellulose-Fasern, Carbon-Fasern, Mineral-Fasern und Kunststoff-Fasern handelt, insbesondere um Glasfasern. Insbesondere bei der Verwendung der erfindungsgemäßen Bindemittelzusammensetzung in Reparaturmörteln ist die Zugabe von Fasern vorteilhaft.

Die vorliegende Erfindung betrifft weiterhin einen Artikel, welcher die oben beschriebene Bindemittelzusammensetzung enthält.

Bevorzugt enthält der Artikel 5,0 bis 100,0 Gew.-%, mehr bevorzugt 15,0 bis 85,0 Gew.-%, besonders bevorzugt 25, bis 75,0 Gew.-% der erfindungsgemäßen Bindemittelzusammensetzung, bezogen auf das Gesamtgewicht des Artikels.

Bevorzugt handelt es sich bei besagtem Artikel um eine Trockenmörtelmischung.

Ein großer Teil der Trockenmörtelmischung kann aus Füllstoffen bestehen.

Der Begriff "Füllstoff" bezieht sich im Rahmen der vorliegenden Erfindung auf Materialien, die hinzugefügt werden können, um das Volumen zu erhöhen, ohne die Eigenschaften der Bindemittelzusammensetzung zu beeinträchtigen.

Demnach enthält der erfindungsgemäße Artikel, bevorzugt die erfindungsgemäße Trockenmörtelmischung, mindestens einen Füllstoff, wobei es sich bevorzugt um mindestens einen aus der Reihe Kreide, Quarzsand, Quarzmehl, Gesteinsmehle,-Leichtfüllstoffe, Calcit, Dolomit, Talkum, Kaolin, Glimmer, Schwerspat, Bimsmehl, Perlit, Mineralschaum, Schaumperlen, Bims, Blähglas, Hohlglaskugeln, Vermiculit und Calciumsilikat-Hydrat handelt.

Bevorzugt enthält der erfindungsgemäße Artikel, bevorzugt die erfindungsgemäße Trockenmörtelmischung, die erfindungsgemäße Bindemittelzusammensetzung und den mindestens einen Füllstoff in einem Gewichtsverhältnis von 1:99 bis 99:1, mehr bevorzugt von 15:85 bis 85:15, besonders bevorzugt von 25:75 bis 75:25.

Demnach enthält der erfindungsgemäße Artikel, bevorzugt die erfindungsgemäße Trockenmörtelmischung, bevorzugt 1,0 bis 99,0 Gew.-%, mehr bevorzugt 15,0 bis 85,0 Gew.-%, noch mehr bevorzugt 25,0 bis 75,0 Gew.-%, besonders bevorzugt 40,0 bis 70,0 Gew.-% der erfindungsgemäßen Bindemittelzusammensetzung und 1,0 bis 99,0 Gew.-%, mehr bevorzugt 15,0 bis 85,0 Gew.-%, noch mehr bevorzugt 25,0 bis 75,0 Gew.-%, besonders bevorzugt 30,0 bis 50,0 Gew.-% Füllstoffe, bezogen auf das Gesamtgewicht des Artikels, bevorzugt der Trockenmörtelmischung.

Besonders bevorzugt handelt es sich bei den Füllstoffen um Quarzsand.

Demnach enthält der erfindungsgemäße Artikel, bevorzugt die erfindungsgemäße Trockenmörtelmischung, bevorzugt 1,0 bis 99,0 Gew.-%, mehr bevorzugt 15,0 bis 85,0 Gew.-%, noch mehr bevorzugt 25,0 bis 75,0 Gew.-%, besonders bevorzugt 40,0 bis 70,0 Gew.-% der erfindungsgemäßen Bindemittelzusammensetzung und 1,0 bis 99,0 Gew.-%, mehr bevorzugt 15,0 bis 85,0 Gew.-%, noch mehr bevorzugt 25,0 bis 75,0 Gew.-%, besonders bevorzugt 30,0 bis 50,0 Gew.-% Quarzsand, bezogen auf das Gesamtgewicht des Artikels, bevorzugt der Trockenmörtelmischung.

Bei ihrer Verwendung wird die erfindungsgemäße Trockenmörtelmischung mit Wasser angemacht, wobei pro Kilogramm Trockenmörtel bevorzugt 50 bis 400 mL, mehr bevorzugt 100 bis 200 mL, besonders bevorzugt 120 bis 150 mL Wasser verwendet werden. Die Zugabe des Wassers erfolgt in einer Putzmaschine oder in einem Behältnis unter kräftigem Rühren mit entsprechend geeigneten Rührvorrichtungen, z.B. einem Korbrührer, der an eine langsam laufende Bohrmaschine (ca. 400 Umdrehungen/min) angeschlossen werden kann.

Desweiteren betrifft die vorliegende Erfindung die Verwendung einer Zusammensetzung umfassend mindestens ein Zinksalz und mindestens ein Alkylamin zur Erreichung hoher Frühfestigkeiten in einer Bindemittelzusammensetzung, die 0,1 bis 99,9 Gew.-% Portlandzement, ii) 0,1 bis 99,9 Gew.-% Tonerdezement, iii) optional 0,1 bis 99,0 Gew.-% Calciumsulfat umfasst.

Bevorzugt handelt es sich bei dem mindestens einen Zinksalz und dem mindestens einen Alkylamin um die oben beschriebenen Zinksalze und Alkylamine.

Die nachfolgenden Beispiele sollen die Erfindung näher erläutern.

### Beispiele

**Trockenmörtel 1 (Referenz)**

| | |
|---|---|
| 25,0 Gew.-% | Portlandzement |
| 15,0 Gew.-% | Tonerdezement |
| 10,0 Gew.-% | Calciumsulfat |
| 5,0 Gew.-% | Microsilica |
| 44,6 Gew.-% | Quarzsand |
| 0,2 Gew.-% | Lithiumcarbonat |
| 0,2 Gew.-% | Weinsäure |
| Anmachwassermenge: | 150 g/kg |

**Trockenmörtel 2 (erfinderisch)**

| | |
|---|---|
| 25,0 Gew.-% | Portlandzement |
| 15,0 Gew.-% | Tonerdezement |
| 10,0 Gew.-% | Calciumsulfat |
| 5,0 Gew.-% | Microsilica |
| 44,4 Gew.-% | Quarzsand |
| 0,2 Gew.-% | Lithiumcarbonat |
| 0,2 Gew.-% | Zinkcitrat |
| 0,2 Gew.-% | Trishydroxymethylaminomethan |
| Anmachwassermenge: | 150 g/kg |

**Trockenmörtel 3 (erfinderisch)**

| | |
|---|---|
| 25,0 Gew.-% | Portlandzement |
| 15,0 Gew.-% | Tonerdezement |
| 10,0 Gew.-% | Calciumsulfat |
| 5,0 Gew.-% | Microsilica |
| 44,0 Gew.-% | Quarzsand |
| 0,2 Gew.-% | Lithiumcarbonat |
| 0,2 Gew.-% | Zinksulfat |
| 0,5 Gew.-% | Triethanolamin |
| 0,1 Gew.-% | Zitronensäure |
| Anmachwassermenge: | 140 g/kg |

**Trockenmörtel 4 (Referenz)**

| | |
|---|---|
| 25,0 Gew.-% | Portlandzement |
| 15,0 Gew.-% | Tonerdezement |
| 10,0 Gew.-% | Calciumsulfat |
| 5,0 Gew.-% | Microsilica |
| 44,6 Gew.-% | Quarzsand |
| 0,2 Gew.-% | Lithiumcarbonat |
| 0,2 Gew.-% | Zinkcitrat |
| Anmachwassermenge: | 150 g/kg |

**Trockenmörtel 5 (Referenz)**

| | |
|---|---|
| 24,9 Gew.-% | Portlandzement |
| 14,9 Gew.-% | Tonerdezement |
| 9,9 Gew.-% | Calciumsulfat |
| 5,0 Gew.-% | Microsilica |
| 44,4 Gew.-% | Quarzsand |
| 0,2 Gew.-% | Lithiumcarbonat |
| 0,2 Gew.-% | Zinkcitrat |
| 0,5 Gew.-% | Ethylenglykol |
| Anmachwassermenge: | 150 g/kg |

**Trockenmörtel 6 (Referenz)**

| | |
|---|---|
| 24,9 Gew.-% | Portlandzement |
| 15,0 Gew.-% | Tonerdezement |
| 10,0 Gew.-% | Calciumsulfat |
| 5,0 Gew.-% | Microsilica |
| 44,5 Gew.-% | Quarzsand |
| 0,2 Gew.-% | Lithiumcarbonat |
| 0,2 Gew.-% | Trishydroxymethylaminomethan |
| 0,2 Gew.-% | Weinsäure |
| Anmachwassermenge: | 150 g/kg |

Von den erhaltenen Frischmassen wurden Prüfkörper hergestellt (160 mm x 40 mm x 40 mm), anhand derer nach DIN EN 12190 die Druckfestigkeit bestimmt wurde. Die Ergebnisse sind in Tabellen 1 bis 6 zusammengefasst.

**Tabelle 1: Druckfestigkeiten mit Trockenmörtel 1 (Referenz)**

| Prüftemperatur | [°C] | **23** | **5** | **-5** |
|---|---|---|---|---|
| Druckfestigkeit nach 1h | [N/mm²] | 18,5 | zu weich | zu weich |
| nach 2h | [N/mm²] | 27,6 | zu weich | zu weich |
| nach 4h | [N/mm²] | 40,3 | 6,8 | zu weich |
| nach 24h | [N/mm²] | 43,9 | 38,5 | zu weich |

**Tabelle 2: Druckfestigkeiten mit Trockenmörtel 2 (erfinderisch)**

| Prüftemperatur | [°C] | **23** | **5** | **-5** |
|---|---|---|---|---|
| Druckfestigkeit nach 1h | [N/mm²] | 22,2 | 12,7 | zu weich |
| nach 2h | [N/mm²] | 39,8 | 28,1 | 3,6 |
| nach 4h | [N/mm²] | 42,3 | 34,9 | 13,8 |
| nach 24h | [N/mm²] | 44,9 | 48,7 | 39,3 |

**Tabelle 3: Druckfestigkeiten mit Trockenmörtel 3 (erfinderisch)**

| Prüftemperatur | [°C] | **23** | **5** | **-5** |
|---|---|---|---|---|
| Druckfestigkeit nach 1h | [N/mm²] | 20,3 | 8,3 | zu weich |
| nach 2h | [N/mm²] | 35,8 | 24,7 | zu weich |
| nach 4h | [N/mm²] | 39,9 | 29,9 | 9,8 |
| nach 24h | [N/mm²] | 46,1 | 50,0 | 30,1 |

**Tabelle 4: Druckfestigkeiten mit Trockenmörtel 4 (Referenz)**

| Prüftemperatur | [°C] | **23** | **5** | **-5** |
|---|---|---|---|---|
| Druckfestigkeit nach 1h | [N/mm²] | - | 1,2 | - |
| nach 2h | [N/mm²] | - | 8,6 | - |
| nach 4h | [N/mm²] | - | 20,1 | - |
| nach 24h | [N/mm²] | - | 51,1 | - |

**Tabelle 5: Druckfestigkeiten mit Trockenmörtel 5 (Referenz)**

| Prüftemperatur | [°C] | **23** | **5** | **-5** |
|---|---|---|---|---|
| Druckfestigkeit nach 1h | [N/mm²] | 18,7 | zu weich | - |
| nach 2h | [N/mm²] | 29,6 | zu weich | - |
| nach 4h | [N/mm²] | 45,2 | 18,6 | - |
| nach 24h | [N/mm²] | 48,9 | 42,0 | - |

**Tabelle 6: Druckfestigkeiten mit Trockenmörtel 6 (Referenz)**

| Prüftemperatur | [°C] | **23** | **5** | **-5** |
|---|---|---|---|---|
| Druckfestigkeit nach 1h | [N/mm²] | 9,6 | zu weich | - |
| nach 2h | [N/mm²] | 20,1 | zu weich | - |
| nach 4h | [N/mm²] | 31,1 | 6,5 | - |
| nach 24h | [N/mm²] | 45,8 | 41,2 | - |

Die Ergebnisse zeigen, dass die erfindungsgemäßen Trockenmörtelmischungen, welche als Zuschlagstoffe sowohl ein Zinksalz als auch ein Alkylamin enthalten, bei Raumtemperatur und bei niedrigeren Temperaturen hohe Frühfestigkeiten aufweisen, während die Referenzmischung insbesondere bei niedrigen Temperaturen nicht ausreichend aushärtet.

## Patentansprüche

1. Bindemittelzusammensetzung, umfassend
i) 0,1 bis 99,9 Gew.-% Portlandzement,
ii) 0,1 bis 99,9 Gew.-% Tonerdezement,
iii) optional 0,1 bis 99,0 Gew.-% Calciumsulfat,
iv) 0,01 bis 10,0 Gew.-% des mindestens einen Zinksalzes, und
v) 0,01 bis 10,0 Gew.-% des mindestens einen Alkylamins,
bezogen auf das Gesamtgewicht der Bindemittelzusammensetzung.

2. Bindemittelzusammensetzung nach Anspruch 1, wobei das mindestens eine Zinksalz ausgewählt ist aus der Gruppe bestehend aus Zinkoxid, Zinkhydroxid, Zinkchlorid, Zinkiodid, Zinkbromid, Zinkphosphat Zinkhydrogenphosphat, Zinkdihydrogenphosphat, Zinkcarbonat, Zinkhydrogencarbonat, Zinknitrat, Zinknitrit, Zinksulfat, Zinkthiosulfat, Zinkhydrogensulfat, Zinksulfit, Zinksulfid, Zinkformiat, Zinkacetat, Zinkgluconat, Zinkstearat, Zinktartrat, Zinkcitrat sowie Gemischen aus diesen.

3. Bindemittelzusammensetzung nach Anspruch 2, wobei es sich bei dem mindestens einen Zinksalz um Zinkcitrat und/oder Zinksulfat handelt.

4. Bindemittelzusammensetzung nach einem der vorherigen Ansprüche, wobei es sich bei dem mindestens einen Alkylamin um einen Aminoalkohol und/oder ein Salz davon handelt.

5. Bindemittelzusammensetzung nach einem der vorherigen Ansprüche, wobei das mindestens eine Alkylamin ausgewählt ist aus der Gruppe bestehend aus Trishydroxymethylaminomethan, Diethanolamin, Triethanolamin, Triisopropanolamin oder Salzen von diesen sowie Gemischen aus diesen.

6. Bindemittelzusammensetzung nach einem der vorherigen Ansprüche, weiterhin enthaltend bis zu 10,0 Gew.-% mindestens eines Zusatzstoffes, wobei es sich um mindestens einen Vertreter der Reihe Verdicker, Wasserretentionsmittel, pH-Modifikatoren, Beschleunigern, Verzögerern, Rheologiemodifikatoren, Hydrophobierungsmitteln, Pigmente, organische oder anorganische Fasern sowie Gemischen aus diesen handelt, bezogen auf das Gesamtgewicht der Bindemittelzusammensetzung.

7. Bindemittelzusammensetzung nach einem der vorherigen Ansprüche, weiterhin enthaltend bis zu 10,0 Gew.-% mindestens einer grenzflächenaktiven Substanz, bezogen auf das Gesamtgewicht der Bindemittelzusammensetzung.

8. Bindemittelzusammensetzung nach Anspruch 7, wobei die mindestens eine grenzflächenaktive Substanz ausgewählt ist aus der Gruppe bestehend aus Luftporenbildnern, Entschäumern, Benetzungsadditiven, Superplastifizierungsmitteln, Tensiden sowie Gemischen aus diesen.

9. Bindemittelzusammensetzung nach einem der vorherigen Ansprüche, weiterhin enthaltend mindestens ein Dispersionspulver ausgewählt aus der Gruppe bestehend aus Polyethylen (PE), Polypropylen (PP), Polyvinylchlorid (PVC), Polyvinylacetat (PVAc), Polyvinylalkohol (PVOH), Polystyrol (PS), Polyacrylat (PAc), Polybutadienen (BR), Vinylester, Versatate, sowie Mischpolymere und/oder Gemischen aus diesen.

10. Bindemittelzusammensetzung nach einem der vorherigen Ansprüche, weiterhin enthaltend mindestens eine latent-hydraulische und/oder eine puzzolanische Komponente ausgewählt ist aus der Gruppe bestehend aus natürlichen oder thermisch aktivierten Gesteinsmehlen, Microsilica, Metakaolin, Alumosilikate, Flugaschen, Vulkanaschen, Trass, Reisschalenasche, aktivierter Ton, Puzzolane, Hüttensand, gebrannter Ölschiefer sowie Gemischen aus diesen.

11. Artikel, umfassend die Bindemittelzusammensetzung nach einem der vorherigen Ansprüche 1 bis 10.

12. Artikel nach Anspruch 11, wobei es sich bei dem Artikel um eine Trockenmörtelmischung handelt.

13. Artikel nach Anspruch 11 oder 12, weiterhin enthaltend mindestens einen Füllstoff.

14. Artikel nach Anspruch 13, wobei es sich bei dem Füllstoff um mindestens einen aus der Reihe Kreide, Quarzsand, Quarzmehl, Gesteinsmehle, Leichtfüllstoffe, Calcit, Dolomit, Talkum, Kaolin, Glimmer, Schwerspat, Bimsmehl, Perlit, Mineralschaum, Schaumperlen, Bims, Blähglas, Hohlglaskugeln, Vermiculit und Calciumsilikat-Hydrat handelt.

15. Verwendung einer Zusammensetzung umfassend mindestens ein Zinksalz und mindestens ein Alkylamin zur Erreichung hoher Frühfestigkeiten in einer Bindemittelzusammensetzung, die, bezogen auf das Gesamtgewicht der Bindemittelzusammensetzung, 0,1 bis 99,9 Gew.-% Portlandzement, ii) 0,1 bis 99,9 Gew.-% Tonerdezement, iii) optional 0,1 bis 99,0 Gew.-% Calciumsulfat umfasst.

## Claims

1. Binder composition comprising
i) 0.1% to 99.9% by weight of Portland cement,
ii) 0.1% to 99.9% by weight of alumina cement,
iii) optionally 0.1% to 99.0% by weight of calcium sulfate,
iv) 0.01% to 10.0% by weight of at least one zinc salt, and
v) 0.01% to 10.0% by weight of at least one alkylamine,
based on the total weight of the binder composition.

2. Binder composition according to Claim 1, wherein the at least one zinc salt is selected from the group consisting of zinc oxide, zinc hydroxide, zinc chloride, zinc iodide, zinc bromide, zinc phosphate, zinc hydrogen phosphate, zinc dihydrogen phosphate, zinc carbonate, zinc hydrogen carbonate, zinc nitrate, zinc nitrite, zinc sulfate, zinc thiosulfate, zinc hydrogen sulfate, zinc sulfite, zinc sulfide, zinc formate, zinc acetate, zinc gluconate, zinc stearate, zinc tartrate, zinc citrate, and mixtures thereof.

3. Binder composition according to Claim 2, wherein the at least one zinc salt is zinc citrate and/or zinc sulfate.

4. Binder composition according to any of the preceding claims, wherein the at least one alkylamine is an amino alcohol and/or a salt thereof.

5. Binder composition according to any of the preceding claims, wherein the at least one alkylamine is selected from the group consisting of tris(hydroxymethylamino)methane, diethanolamine, triethanolamine, triisopropanolamine or salts thereof and mixtures thereof.

6. Binder composition according to any of the preceding claims, further comprising up to 10.0% by weight, based on the total weight of the binder composition, of at least one additive, this being at least one representative of the following series: thickeners, water-retention agents, pH modifiers, accelerators, retarders, rheology modifiers, hydrophobizing agents, pigments, organic or inorganic fibres, and mixtures thereof.

7. Binder composition according to any of the preceding claims, further comprising up to 10.0% by weight of at least one surface-active substance, based on the total weight of the binder composition.

8. Binder composition according to Claim 7, wherein the at least one surface-active substance is selected from the group consisting of air-entraining agents, defoamers, wetting additives, superplasticizers, surfactants, and mixtures thereof.

9. Binder composition according to any of the preceding claims, further comprising at least one dispersion powder selected from the group consisting of polyethylene (PE), polypropylene (PP), polyvinyl chloride (PVC), polyvinyl acetate (PVAc), polyvinyl alcohol (PVOH), polystyrene (PS), polyacrylate (PAc), polybutadienes (BR), vinyl esters, Versatates, and copolymers and/or mixtures thereof.

10. Binder composition according to any of the preceding claims, further comprising at least one latently hydraulic and/or pozzolanic component is selected from the group consisting of natural or thermally activated rock powders, microsilica, metakaolin, aluminosilicates, fly ashes, volcanic ashes, trass, rice-husk ash, activated clay, pozzolans, slag sand, burnt oil shale, and mixtures thereof.

11. Article comprising the binder composition according to any of the preceding Claims 1 to 10.

12. Article according to Claim 11, wherein the article is a dry-mortar mix.

13. Article according to Claim 11 or 12, further comprising at least one filler.

14. Article according to Claim 13, wherein the filler is at least one from the following series: chalk, quartz sand, quartz powder, rock powders, lightweight fillers, calcite, dolomite, talc, kaolin, mica, heavy spar, pumice powder, perlite, mineral foam, foam beads, pumice, foam glass, hollow-glass spheres, vermiculite, and calcium silicate hydrate.

15. Use of a composition comprising at least one zinc salt and at least one alkylamine for achieving high early strengths in a binder composition that comprises, based on the total weight of the binder composition, 0.1% to 99.9% by weight of Portland cement, ii) 0.1% to 99.9% by weight of alumina cement, iii) optionally 0.1% to 99.0% by weight of calcium sulfate.

## Revendications

1. Composition de liant, comprenant
i) 0,1 à 99,9 % en poids de ciment Portland,
ii) 0,1 à 99,9 % en poids de ciment alumineux,
iii) éventuellement 0,1 à 99,0 % en poids de sulfate de calcium,
iv) 0,01 à 10,0 % en poids d'au moins un sel de zinc, et
v) 0,01 à 10,0 % en poids d'au moins une alkylamine,
par rapport au poids total de la composition de liant.

2. Composition de liant selon la revendication 1, l'au moins un sel de zinc étant choisi dans le groupe constitué par l'oxyde de zinc, l'hydroxyde de zinc, le chlorure de zinc, l'iodure de zinc, le bromure de zinc, le phosphate de zinc, l'hydrogénophosphate de zinc, le dihydrogénophosphate de zinc, le carbonate de zinc, l'hydrogénocarbonate de zinc, le nitrate de zinc, le nitrite de zinc, le sulfate de zinc, le thiosulfate de zinc, l'hydrogénosulfate de zinc, le sulfite de zinc, le sulfure de zinc, le formiate de zinc, l'acétate de zinc, le gluconate de zinc, le stéarate de zinc, le tartrate de zinc, le citrate de zinc ainsi que des mélanges de ceux-ci.

3. Composition de liant selon la revendication 2, l'au moins un sel de zinc étant le citrate de zinc et/ou le sulfate de zinc.

4. Composition de liant selon l'une quelconque des revendications précédentes, l'au moins une alkylamine étant un aminoalcool et/ou un sel de celui-ci.

5. Composition de liant selon l'une quelconque des revendications précédentes, l'au moins une alkylamine étant choisie dans le groupe constitué par le trishydroxyméthylaminométhane, la diéthanolamine, la triéthanolamine, la triisopropanolamine et des sels de ceux-ci ainsi que des mélanges de ceux-ci.

6. Composition de liant selon l'une quelconque des revendications précédentes, contenant en outre jusqu'à 10,0 % en poids d'au moins un adjuvant, qui est au moins un représentant de la série des épaississants, des agents de rétention d'eau, des modificateurs de pH, des accélérateurs, des retardateurs, des modificateurs de rhéologie, des agents d'hydrophobisation, des pigments, des fibres organiques ou inorganiques ainsi que des mélanges de ceux-ci, par rapport au poids total de la composition de liant.

7. Composition de liant selon l'une quelconque des revendications précédentes, contenant en outre jusqu'à 10,0 % en poids d'au moins une substance active en surface, par rapport au poids total de la composition de liant.

8. Composition de liant selon la revendication 7, l'au moins une substance active en surface étant choisie dans le groupe constitué par des entraîneurs d'air, des agents antimousse, des additifs de mouillage, des agents superplastifiants, des tensioactifs ainsi que des mélanges de ceux-ci.

9. Composition de liant selon l'une quelconque des revendications précédentes, contenant en outre au moins une poudre de dispersion choisie dans le groupe constitué par un polyéthylène (PE), un polypropylène (PP), un poly(chlorure de vinyle) (PVC), un poly(acétate de vinyle) (PVAc), un poly(alcool vinylique) (PVOH), un polystyrène (PS), un polyacrylate (PAc), des polybutadiènes (BR), un ester de vinyle, des versatates, ainsi que des copolymères et/ou des mélanges de ceux-ci.

10. Composition de liant selon l'une quelconque des revendications précédentes, contenant en outre au moins un composant hydraulique latent et/ou pouzzolanique est choisi dans le groupe constitué par des farines de roche naturelles ou thermiquement activées, la microsilice, le métakaolin, des aluminosilicates, des cendres volantes, des cendres volcaniques, du trass, des cendres de coque de riz, de l'argile activée, des pouzzolanes, du sable de laitier, des schistes calcinés ainsi que des mélanges de ceux-ci.

11. Article, comprenant la composition de liant selon l'une quelconque des revendications 1 à 10.

12. Article selon la revendication 11, l'article étant un mélange de mortier sec.

13. Article selon la revendication 11 ou 12, contenant en outre au moins une charge.

14. Article selon la revendication 13, la charge étant au moins l'un des éléments de la série suivante : de la craie, du sable de quartz, de la farine de quartz, des farines de roche, des charges légères, de la calcite, de la dolomite, du talc, du kaolin, du mica, de la baryte, de la farine de pierre ponce, de la perlite, de la mousse minérale, des perles en mousse, de la pierre ponce, du verre soufflé, des billes de verre creuse, de la vermiculite et de l'hydrate de silicate de calcium.

15. Utilisation d'une composition comprenant au moins un sel de zinc et au moins une alkylamine pour atteindre des résistances élevées à court terme dans une composition de liant, qui par rapport au poids total de la composition de liant, comprend 0,1 à 99,9 % en poids de ciment Portland, ii) 0,1 à 99,9 % en poids de de ciment alumineux, iii) éventuellement 0,1 à 99,0 % en poids de sulfate de calcium.
